# EUROPEAN PATENT APPLICATION

(11) **EP 2 282 088 A1**
(43) Date of publication of application: **09.02.2011**
(21) Application number: 09164436.9
(22) Date of filing: 02.07.2009
(51) Int. Cl.: F16K 11/044, F16K 31/00, F24H 9/12, F28D 20/00

(54) **Actuator unit**

(71) Applicant: Dantherm Power A/S, 9500 Hobro (DK)
(72) Inventor: Nielsen, Helge, 6470 Sydals (DK)
(74) Representative: Nestler, Jan Hendrik

(57) **Abstract**

The invention relates to actuator unit (4), in particular to an actuator unit (4) for a valve means (3). The actuator unit (4) comprises at least two mechanical sensor units (10,11), which are acting on at least one common actuating unit (15,24).

## Description

The invention relates to an actuator unit, in particular to an actuator unit for a valve means. Furthermore, the invention relates to a valve unit, comprising at least one valve means and at least one actuator unit. Additionally, the invention relates to a fluid storage tank. Furthermore, the invention relates to a thermal energy storage system.

For example in connection with heating systems, using thermal solar collectors, it is usually required to store thermal energy, produced by the thermal solar collector in times when an excess of thermal energy is generated by the thermal solar collector. This thermal energy can later be used, for example at night and/or when a high demand for thermal energy is momentarily present. For this purpose, thermal energy storage tanks are widely used. Such a thermal energy storage tank essentially consists of a tank, comprising a large inner volume. The tank is filled with a thermal energy storage fluid (usually water) and shows several fluid ports to the exterior. These fluid ports are used for connecting the thermal energy storage tank to the thermal solar collector (and/or another heat producing equipment) on one side and to thermal energy consumers (for example a water tap in an open system and/or a heating circuit, heat exchangers or the like in closed loop systems) on the other side.

However, in the mid-latitude regions, the heat production capacity of thermal solar collectors is usually not sufficient for a year-round 24 hours/7 days a week supply of the thermal consumers, even if a thermal energy buffer (like a thermal energy storage tank) is used. For example, in wintertime usually additional sources of thermal energy have to be used to supply the various thermal consumers, in particular room heating systems, with sufficient thermal energy. Therefore, a plurality of thermal energy sources has to be connected to the thermal energy storage tank.

The various sources of thermal energy typically have varying abilities to heat up the thermal energy storage liquid to different temperature levels. For example, heat pumps usually have a relatively low output temperature, since they are more efficient when operated at a smaller temperature spread. On the other hand, gas burners and oil burners can easily produce high output temperatures. With certain thermal energy sources, the output temperature level can even vary with time. As an example, solar collectors produce very high output temperatures during midday in summertime, while they produce way lower temperatures in the early morning and/or late evening hours during wintertime.

Similar to the thermal energy sources, the thermal energy consumers are typically best operated at different temperature levels as well. As an example, floor heating systems can be operated at relatively low temperatures (typically in the 40°C region), while tap water should be provided at a relatively high temperature (usually at 60°C or above).

To provide for an energy efficient thermal energy supply system while taking into account the various temperature levels of the thermal energy sources and the thermal energy consumers it has been already suggested to use thermal energy storage tanks in a temperature stratified mode. I.e., the thermal energy storing fluid is stored in different layers, each having a different temperature. However, no separating walls are used. Therefore, the different layers are directly connected to each other. In the case of water as a thermal energy storage fluid, the higher temperature layers are stored in the upper regions of the thermal energy storage tank, while the lower temperature layers are stored in the lower regions of the thermal energy storage tank, due to the physical properties of water. To be able to achieve such a stratified tank filling, it is necessary to eject the (heated) input thermal energy storage fluid at an appropriate height into the thermal energy storage tank at a relatively low injection speed. This height depends on the temperature profile within the thermal energy storage tank as well as on the temperature of the input thermal energy storage fluid.

The advantage of using stratified temperature layers is that the fluid ports of the thermal energy consumers can be provided at different heights of the thermal energy storage tank, wherein the heights are chosen according to the temperature needs of the respective thermal energy consumer. For example, a floor heating system can be supplied through fluid ports that are positioned in the lower regions of the tank, while water tap (needing a higher temperature level) can be supplied through fluid ports that are positioned in the upper parts of the tank. This way, in times when the thermal energy storage tank is not completely heated up, the more "precious" thermal fluid being at a higher temperature level will only be used for the supply of thermal energy consumers, needing such an elevated temperature level. This way, a higher overall efficiency of the thermal energy supply system can be achieved. To be able to fill a thermal energy storage tank with stratified layers of different temperature, it is not only necessary to inject the water at relatively low speeds (usually at or below 3 cm/s), but it is also essential to use valves that will open and close depending on the temperature of the fluid within the tank (more precisely at the position where the respective input port is located) and the temperature of the incoming heated fluid.

One possible way according to the state of the art to achieve this requirement is to provide the thermal energy storage tank with a plurality of electrically actuated valves that are positioned at various heights in the tank, and with a plurality of electronic temperature sensors. The signals of the various electronic temperature sensors are fed into an electronic controller. Depending on the various input signals, the electrically actuated valves are opened and closed appropriately. Although such systems are performing usually very well, they are quite elaborate and therefore quite expensive to build. In particular, electrically insulating problems between the electric components and the fluid within the tank have to be avoided. This does not only relate to the construction of the system, but also to its maintenance. Another problem is the need for electrical energy for the system to operate.

Another approach was suggested in the German utility model DE 200 03 852 U1. Here, it is suggested to use a storage tank having two fluid inlet tubes at different heights of the tank. These two fluid inlet tubes are connected to a changeover valve. The changeover valve is actuated by a thermal expansion element that is sensing the temperature of the incoming fluid. Depending on the temperature of the incoming fluid, the fluid is either ejected into the upper part or the lower part of the storage tank. A problem of such a device, as described in the German utility model, is that it does not take into account the temperature of the thermal storage fluid already present in the tank. Hence, a less than optimal fluid distribution and efficiency of the system results.

It is therefore an object of the invention to provide for an improved actuator unit. It is another object of the invention to provide for an improved valve unit. Other objects of the invention are to provide for an improved fluid storage tank and to provide for an improved thermal energy storage system.

It is suggested to provide an actuator unit with at least two mechanical sensor units which are acting on at least one common actuating unit. In particular, the actuator unit can be an actuator unit for valve means that can be preferably used for thermal energy fluid storage tanks. By such a design it is possible to change the position of the actuating unit (and hence of the position of the valve being connected to the actuating unit) not only in dependence of an absolute value of one or more of the parameters involved with the system. Instead, it is possible to change the position of the actuating unit in dependence of a difference between two or more parameters of the system involved. This can be done by using two sensors, each measuring an absolute value of the respective parameter and by coupling the two sensor units to a common actuating unit. The common actuating unit can be, for example, a common rod, a common shaft, a common mounting plate, common valve inner parts, two parts of a valve unit (for example valve head and valve seat) or the like. Contrary to elaborate electronic systems, where electronic sensors are used, and where the output signals of the electronic sensors are received and processed by an electronic controller for generating an (electric) output signal for operating the valve device (or another device), it is presently suggested to use mechanical sensor units. In particular, such mechanical sensor units can directly "convert" an input parameter into an output signal, without the need for any electrical energy. This way, the resulting machine can be of a simpler design and can be particularly failsafe and self-contained. Of course, all types of mechanical sensor units can be used. Therefore, not only mechanical sensor units, detecting an absolute value of a parameter of the system can be used, but (if available) mechanical sensor units, which are directly detecting a difference between two values can be used as well. As examples, without limitation, bi-metal strips or springs, memory-effect materials, closed volume temperature sensors, pressure sensors or the like could be used as mechanical sensor units. Furthermore, the mechanical sensor units involved can (at least in part) detect the same parameter (like temperature, pressure, etc) or can detect different parameters as well.

Preferably, the actuator unit comprises at least to sensor groups, wherein each sensor group comprises at least one mechanical sensor unit and wherein preferably at least one of said sensor groups comprises a plurality of mechanical sensor units. The expression "sensor group" is usually to be understood in a way that each sensor unit of the respective group detects the same parameter (for example a temperature, a pressure, etc.) at the same location. Usually, two different sensor groups will detect the same parameter at different locations and/or will detect different parameters (either at the same location and/or at different locations). By the notion "location", it is usually not the mounting position of the respective sensor group and/or the mounting position of the respective sensor unit that is meant. Instead, usually the parameters of the media that are used to control the actuator unit are meant by this expression. As an example, in case the actuator unit is to be operated depending on the temperature difference between two fluid distinguishable volumes, the "location of the first sensor group" (or sensor unit) is to be understood in a way that the respective sensor group (or sensor unit) detects the temperature of the first fluid volume, while the "location of the second sensor group" (or sensor unit) is to be understood in a way that the respective sensor group (or sensor unit) detects the temperature of the second fluid volume. Again, it is possible that the sensor groups and/or the sensor units involved detect (at least in part) the same parameter (for example a temperature, a pressure or the like) and/or different parameters.

Preferably, the actuator unit is designed in a way that at least two of said sensor groups and/or at least two of said mechanical sensor units are detecting a similar parameter and/or are of a similar design. This way, it is possible to actuate the actuator unit depending on the difference between two parameters, while using two sensor units, detecting "absolute" parameters. In particular, it is possible to provide a plurality of mechanical sensor units (possibly in one, several and/or all sensor groups). This way it is possible to "amplify" the actuating output (the force, the actuating length or the like) of the respective sensor unit array. The use of a similar design for several (or even all) of the mechanical sensor units will usually result in a cheap construction of the complete arrangement and/or in more accurate output signals.

A preferred embodiment of the invention can be achieved if at least one, preferably at least two of said mechanical sensor units are designed as temperature measuring units and/or if at least one of said sensor groups, preferably at least two of said sensor groups comprises at least one temperature measuring unit. This way, the operation of the arrangement, the actuator unit is used for, can be based on temperatures and/or temperature differences. This makes the suggested actuator unit particularly useful for a system for storing fluids in a (common) fluid tank in a temperature stratified way.

An even more preferred embodiment of the invention can be achieved if the actuator unit is designed in a way that at least one of said sensor units, preferably at least one temperature measuring unit, comprises at least one variably expanding medium. This variably expanding medium can be contained in closed container. The expansion and/contraction of the medium can be converted into a linear expansion and/or contraction of the respective device. This way, the respective parameter can be easily sensed and a respective actuating output of the respective sensor unit and/or the respective actuating unit can be achieved. In particular, the variably expanding medium can be a thermally expanding medium. This way, a very useful thermal sensor can be achieved. In particular, the variably expanding medium can be, at least in part, a fluid like a gas, a liquid, a mixture of a gas and liquid and/or a hypercritical fluid. Of course, it is also possible that the fluid can contain to a certain extent solid particles (smoke and/or suspensions, for example).

Furthermore it is possible to design the actuator unit in a way that at least one of said sensor units is connected to at least one of said common actuating units by a connecting means. Such a connecting means can be a rod, a shaft, a rope, a tooth wheel, a tube (for example a tube through which a variably expanding medium can pass), a lever or the like. This way, a "remote sensing" can be easily achieved, while the actuating output is provided at a different position. In particular, the detecting parts and the actuating outputs of the mechanical sensor units involved can be easily separated from each other, if necessary.

Furthermore, a valve unit is suggested, which comprises at least one valve means and at least one actuator unit, wherein the actuator unit is of the previously suggested design. The valve means can be an opening/closing valve, a changeover valve and so on. Valve units of the suggested design will show the already described features and advantages in analogy.

Preferably, the valve unit is designed in a way that at least one of said valve means comprises at least three fluid ports and is even more preferably designed as a changeover valve. This way, the resulting valve unit will be particularly well suited for being used in thermal energy fluid storage tanks with temperature stratified fluid layers.

Furthermore, a fluid storage tank is suggested, comprising at least one actuator unit of the previously described design and/or comprising at least one valve unit of the previously described design. Such a fluid storage tank will show the already described features and advantages in analogy as well.

In particular, it is possible to design the fluid storage tank in a way that at least one fluid line, communicating with said fluid storage tank through at least one valve unit according to the previously described design is used. Such a fluid storage tank is particularly useful for storing liquids in different thermally stratified fluid layers. In particular, if more valve units are used, more stratified fluid layers of different temperatures can be generated inside the fluid storage tank.

Furthermore, a thermal energy storage system is suggested, comprising at least one fluid storage tank according to the previous description. The thermal energy storage system will then show the previously described features and advantages in analogy as well.

In particular, the thermal energy storage system can be designed to comprise at least one heat exchanger. This way, a (partially and/or completely) closed system (concerning the thermal energy storage, the thermal energy consumers and/or the thermal energy generation units) can be achieved. Usually, such a device will show greater flexibility and/or is less subject to contamination, corrosion and so on.

Preferably, the thermal energy storage system comprises at least one energy input means, preferably at least one energy input means taken from the group comprising solar collectors, geothermal collectors, heat pumps, fuel cells, heating means and district heating networks. By the expression "heating means" in particular oil heaters, gas heaters, electric heaters and/or boilers are encompassed. Using one - preferably several - energy input means, a sufficiently high temperature level within the fluid storage tank can be sustained. The different mentioned thermal energy sources have proven to be particularly useful in connection with the presently suggested device.

The present invention and its advantages will become more apparent, when looking at the following description of possible embodiments of the invention, which will be described with reference to the accompanying figures, which are showing:
- Fig. 1:: a first possible embodiment of a differential temperature valve in a schematic cross section;
- Fig. 2:: a distance-temperature-graph for the bellows used in the differential temperature valve, shown in Fig. 1;
- Fig. 3:: a second possible embodiment of a differential temperature valve in a schematic cross section;
- Fig. 4:: an embodiment of a thermal energy supply system with a stratified thermal energy storage tank;
- Fig. 5:: a more detailed view on the valve head of the differential tempera- ture valve, shown in Fig. 1.

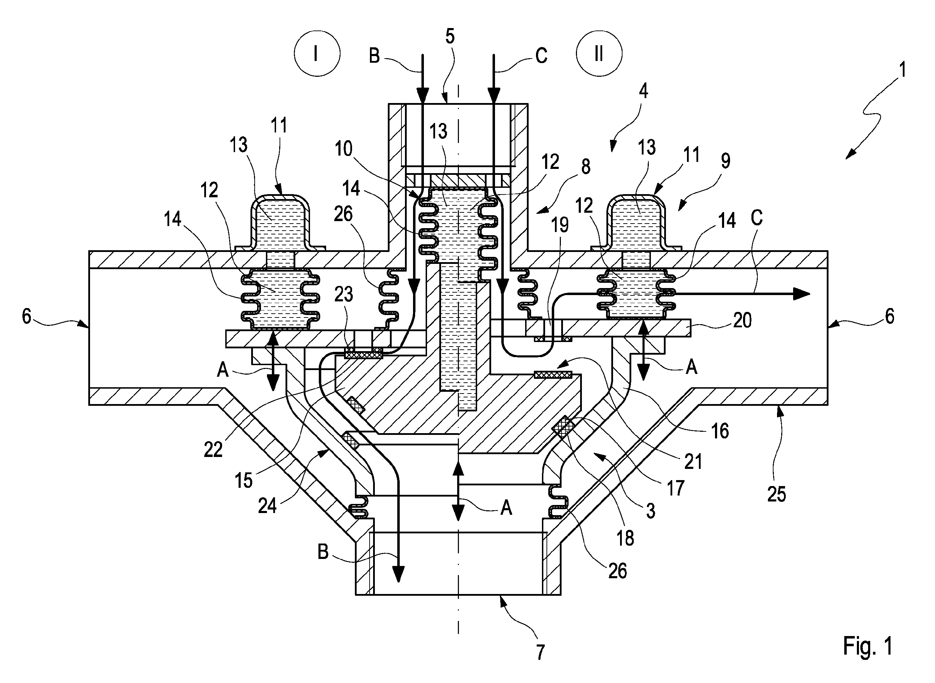

In Fig. 1, a first possible embodiment of a differential temperature valve 1 is shown in a schematic cross section. The drawing is divided into two parts I (left side of the drawing) and II (right side of the drawing), showing the differential temperature valve 1 in two different positions.

The differential temperature valve 1 basically comprises a valve part 3 that is actuated by an actuator part 4. Furthermore the differential temperature valve 1 comprises three different fluid ports 5, 6, 7. Depending on the condition of the actuator part 4 and hence of the valve part 3, different ones of the fluid ports 5, 6, 7 are connected to each other, which will be explained in more detail in the following.

The actuator part 4 comprises two different sensor groups 8, 9, namely the fluid inlet sensor group 8 and the fluid tank sensor group 9. In the present embodiment of the differential temperature valve 1, the fluid inlet sensor group 8 comprises a single fluid inlet temperature sensor 10, while the fluid tank sensor group 9 comprises a plurality of (presently three) fluid tank temperature sensors 11. For clarity issues, only two of the fluid tank temperature sensors 11 are shown in the drawing.

The different fluid temperature sensors 10, 11 are arranged in a way that the fluid temperature sensors 10, 11 of the two different sensor groups 8, 9 detect the temperatures of different fluid areas. Namely, the (single) fluid inlet temperature sensor 10 of the fluid inlet sensor group 8 is exposed to the fluid temperature within the fluid inlet port 5, thus detecting the temperature of the fluid that is entering the differential temperature valve 1 through fluid inlet port 5. Likewise, the (altogether three) fluid tank temperature sensors 11 of the fluid tank sensor group 9 are exposed to the fluid within the storage tank 41 and to the fluid within the fluid outlet port 6, thus effectively detecting the temperature of the fluid in the vicinity of the differential temperature valve 1 inside the thermal storage tank 41.

In the presently described example, the different temperature sensors 10, 11 are designed as fluid 13 filled closed cavities 12. The fluid 13 within the closed cavities 12 is chosen in a way that it expands and contracts significantly with changing temperature. As can be seen from the drawing, part of the closed cavities 12 are designed as bellows 14 and are appropriately arranged. If the temperature of the fluid around the respective temperature sensor 10, 11 changes, the temperature of the fluid 13 inside the closed cavity 12 changes as well, resulting in a volume change of the respective fluid 13. This volume change translates into a linear movement of a certain part and/or surface of the bellows 14 (as indicated by the double-headed arrow A for each of the temperature sensors 10, 11). It has to be noted that all of the temperature sensors 10, 11 used for the differential temperature valve 1 are of a mechanical type. I.e., they do not rely on electrical energy for measuring and/or processing the respective parameter. This makes it possible for the differential temperature valve 1 (and for the resulting device as well) to be designed highly self-sustained. Furthermore, no electronic devices for calculating any output values are necessary.

A modification of the fluid tank sensor group 9 can be achieved, if the upper parts of the fluid tank temperature sensors 11 are combined in a way to form a continuous, common ring. The lower parts of the fluid temperature sensors 11, however, can continue to be shaped as individual "bolt-shaped" temperature sensors 11. Using such a modification of the fluid tank sensor group 9, the fluid tank sensor group 9 will be predominantly dependent on the temperature of the fluid inside the storage tank 41 on the outside of the differential temperature valve 1. However, a small dependence on the temperature of the fluid within the fluid outlet port 6 will still be present. In particular, the fluid tank sensor group 9 of the presently suggested modified design can share a common cavity 12 and a common fluid 13 reservoir.

The operation of the differential temperature valve 1 is as follows: if hot fluid enters through the fluid inlet port 5 and the temperature of the ambient fluid in the fluid storage tank 41 is sufficiently low, the fluid inlet temperature sensor 10 will expand under the influence of the surrounding hot fluid and will push the valve head 15 downward. Due to the sufficiently low temperature of the fluid within the surrounding fluid storage tank 41, the fluid tank temperature sensors 11 will contract. Therefore, the valve seat 16 of the valve part 3 will be moved upward. Both movements together will result in position II of the differential temperature valve 1, shown on the right side of Fig. 1. In this position II, a sealing ring 17, arranged on the valve head 15 and a sealing rim 18, arranged on the valve seat 16 will interact, thus closing the fluid connection B between fluid inlet port 5 and fluid through port 7, as well as the fluid connection between fluid outlet port 6 and fluid through port 7. Furthermore, the fluid, entering the differential temperature valve 1 through fluid inlet port 5 will pass through the openings 19, provided in the movable sealing plate 20, which is mounted near the upper surface 21 of the valve head 15. From there, the fluid will leave the differential temperature valve 1 through the fluid outlet port 6 (fluid path C).

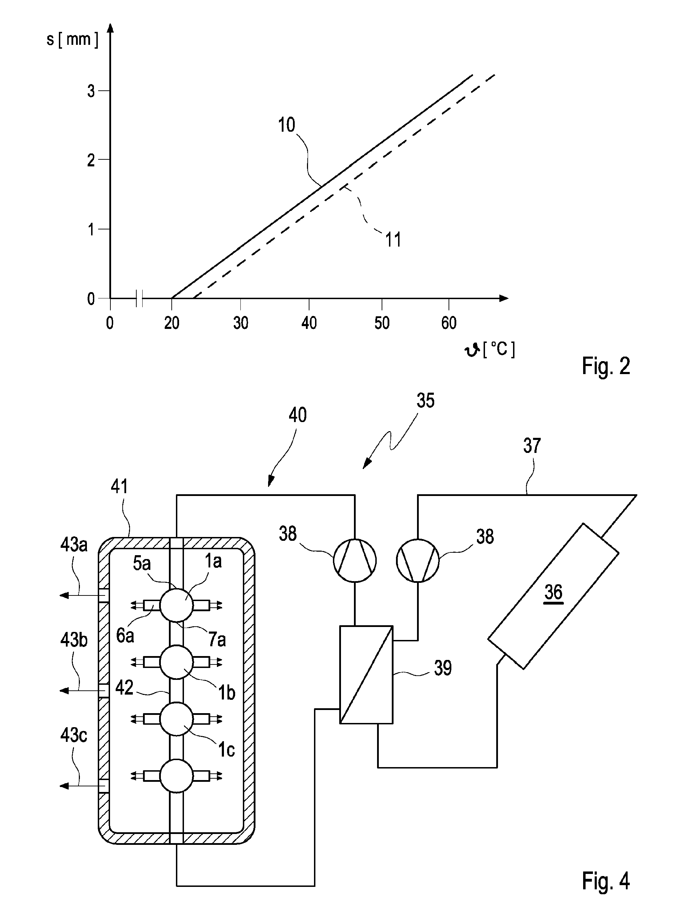

If the differential temperature valve 1 is arranged in a fluid storage tank 41 (compare to Fig. 4), the hot fluid, leaving the differential temperature valve 1 through fluid outlet port 6 will eventually heat up the fluid layer surrounding the differential temperature valve 1 in the fluid storage tank 41. Once the surrounding fluid has eventually reached a certain temperature, the fluid tank temperature sensors 11 will expand under the temperature change, thus moving the sealing plate 20 downward. Therefore, the sealing ring 17 of the valve head 15 and the sealing rim 18 of the valve seat 16 will get out of contact with each other, thus opening the fluid connection between fluid inlet port 5 and fluid through port 7. At the same time, the sealing plate 20 will get in contact with the sealing areas 22, provided on the upper surface 21 of the valve head 15 (to improve the sealing contact between the sealing plate 20 and the sealing areas 22, small projections 23 are arranged circumferentially around the openings 19 of the sealing plate 20). Due to the sealing contact between sealing plate 20 and valve head 15, the fluid connection C between fluid inlet port 5 and the fluid outlet port 6 is interrupted, while the fluid connection B between fluid inlet port 5 and fluid through port 7 is established. This situation is depicted on side I (i.e. the left side) of Fig. 1.

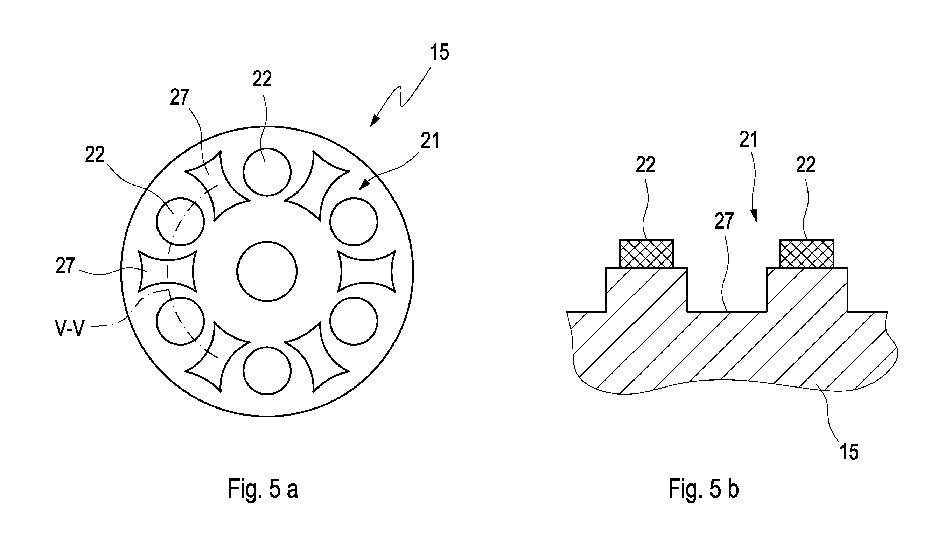

It should be noted that the valve seat 16 and the sealing plate 22 are combined to form a movable unit 24 that is movably arranged in the body 25 of differential temperature valve 1. The connection between the movable unit 24 and the body 25 is made by flexible bellows-shaped rings 26, which provide for the necessary sealing between the three different fluid ports 5, 6, 7 of the differential temperature valve 1. Furthermore it should be noted that the upper surface 21 of the valve head 15 is not even, but structured. The structure of the upper surface 21 of valve 15 is further elucidated in Fig. 5. Figure 5a shows a view from above onto the upper surface 21 of the valve head 15. As can be seen, in a circumferential direction V-V of the upper surface 21 sealing areas 22 and trenches 27 are arranged following one after another. The situation is further shown in Fig. 5b, showing a cross section following the line V-V, as indicated in Fig. 5a. Of course, openings 19 are only provided within the sealing plate 20 in the vicinity of the sealing areas 22 on the upper surface 21 of the valve head 15.

Furthermore, it should be noted that the position of the differential temperature valve 1, as shown in the area I (left side) of Fig. 1 is also reached if the temperature of the fluid, entering the differential temperature valve 1 through fluid inlet port 5 is low. In this case, the fluid 12 inside fluid inlet temperature sensor 10 will contract, thus pulling the valve head 15 upward. This will result in a sealing contact between sealing areas 22 and sealing plate 20, while opening the fluid passage B between sealing ring 17 and sealing rim 18 on the lower part of the valve head 15.

More precisely, the position of the differential temperature valve 1 is not dependent on the temperature around fluid inlet sensor group 8 and/or the temperature around fluid tank sensor group 9 alone, but is instead dependent on the temperature difference between both sensor groups 8, 9. Hence, the differential temperature valve 1 is in effect a differential temperature valve 1.

If the differential temperature valve 1 is to be placed inside a fluid storage tank 41, in which stratified fluid layers are to be established, the ejection speed of the fluid, leaving the differential temperature valve 1 through the fluid outlet ports 6 should be sufficiently low. For supporting such a low fluid ejection speed, the radius of the differential temperature valve 1 and thus the length of the outer circumference of the body 25 of the differential temperature valve 1 can preferably be designed to be quite large. If the thickness of the body 25 and/or the body walls in the radially outer regions of the differential temperature valve 1 is relatively small, the resulting differential temperature valve 1 can still be relatively lightweight.

In Fig. 2, a preferred embodiment for the design of the fluid inlet temperature sensors 10 and the fluid outlet temperature sensors 11 is shown. Fig. 2 shows the dependence between the elongation of the respective sensor 10, 11 and the temperature, the respective sensor 10, 11 is exposed to. Preferably, the two lines should be essentially parallel to each other and separated by an only relatively small distance so that the switching difference between the two modes I and II of the differential temperature valve 1 (see Fig. 1) is sufficiently small.

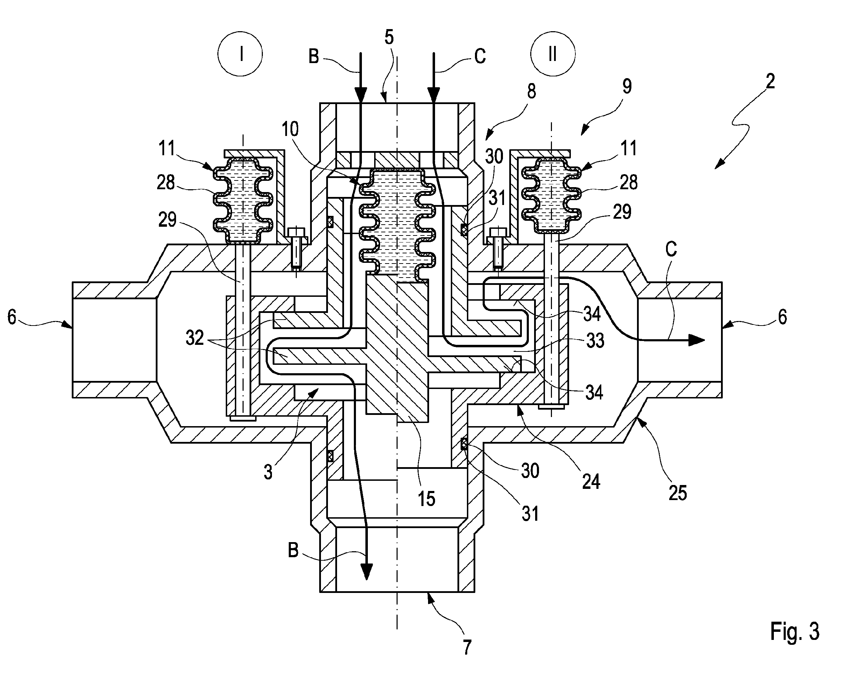

In Fig. 3, a second possible embodiment for a differential temperature valve 2 is shown in a schematic cross section. Similar to the differential temperature valve 1 in Fig. 1, the presently shown differential temperature valve 2 is shown in two different positions I (left side) and II (right side) in the drawing of Fig. 3.

The working principles of both differential temperature valves 1 and 2 are quite similar. However, some constructive differences do exist.

A first difference is that the movable unit 24 that is movably arranged within the body 22 of the differential temperature valve 2 is not directly connected to the bellows 28 of the fluid tank temperature sensor 11 of the fluid tank sensor group 9. Instead, the bellows 28 are arranged completely outside of the body 25 of the differential temperature valve 2. The mechanical connection between the bellows 28 and the movable unit 24 is performed by small rods 29, which are attached to the lower side of the bellows 28 of the fluid tank temperature sensor 11 and the movable unit 24, respectively. This has the advantage that the temperature (and hence the elongation) of the fluid tank temperature sensor 11 is not influenced by the fluid, entering the differential temperature valve 2 through fluid inlet port 5 and following fluid path C to the fluid outlet port 6 (of course the differential temperature valve 2 has to be in position II). This can result in improved switching characteristics of the differential temperature valve 2. However, it should be noted that depending on the concrete situation, the switching characteristics of the differential temperature valve 1 according to the first embodiment, as shown in Fig. 1 can prove to be advantageous as well.

A second difference between the two differential temperature valves 1, 2, shown in Figs. 1 and 2, is the sealing between the three different fluid ports 5, 6, 7. In the presently shown embodiment of Fig. 3, this sealing is performed by O-rings 30, which are arranged in specially provided grooves 31 and are arranged between the respective moving parts 15, 24 and the body 25.

A third difference is the design of the valve part 3 of the differential temperature valve 2. As can be seen in Fig. 3, the valve head 15 is designed as some kind of a double plate 32 shaped valve head 15 with a fluid channel 33 interspaced between the two plates 32. The respective sealing contact is performed between one of the two plates 32 of the valve head 15 and an opposing surface 34 of the movable unit 24. This design has the advantage that the valve head 15 and the movable unit 24 can be designed essentially spherically symmetric. This way, particularly large fluid flow cross-section can be provided. Of course, the different parts (in particular the two plates 32) of the valve head 15 have to be mechanically connected to each other using some connecting web or the like.

Finally, in Fig. 4, a simplified schematic of a thermal energy supply system 35 is shown. The thermal energy is supplied by a thermal solar collector 36. The thermal solar collector 36 is connected to a closed fluid loop 37. The fluid inside the closed fluid loop 37 is moved by an electric pump 38.

The thermal energy, collected by the thermal solar collector 36 is transferred to a thermal storage circuit 40 by means of a heat exchanger 39. A pump 38 is provided in the thermal storage circuit 40 as well, for moving the fluid within the thermal storage circuit 40. The pumping speed is chosen to be relatively low in the thermal storage circuit 40. This is to be able to achieve the generation of thermally stratified fluid layers within thermal storage tank 41 of the thermal storage circuit 40. Generally, the pumping speed of the pump 38 should be chosen in a way that the fluid speed at the exit of the differential temperature valves 1 a, 1 b, 1 c... should be 3 cm/s or lower. Such a low fluid speed can be particularly achieved by a slow pump 38 and/or by differential temperature valves 1, 2 with a large diameter.

As can be seen from Fig. 4, a through going tube 42 is arranged in the centre of the thermal storage tank 41. The tube 42 is divided into several segments by a plurality of differential temperature valves 1 a, 1 b, 1 c... (of course, the differential temperature valves 2 of the second embodiment or even of another design could be used as well).

If the temperature of the incoming fluid at the fluid inlet port 5a of the differential temperature valve 1a is higher as the surrounding temperature in the thermal storage tank 41, the differential temperature valve 1 a will be in a position so that fluid is ejected into the tank 41 through the fluid outlet port 6a. Therefore, the respective part of the thermal storage tank 41 will be heated up.

If, however, the temperature of the incoming fluid at the fluid inlet port 5a is lower than the temperature of the surrounding fluid, the incoming fluid is simply passed on to the fluid through port 7a and consequently no fluid is ejected into the energy storage tank 41 at the location of this differential temperature valve 1 a.

However, the fluid will now be passed on to the next differential temperature valve 1b along the following segment of tube 42. Even if the fluid temperature in the upper part of the storage tank 41 is higher than the incoming fluid, this might not be true for the second segment of the storage tank 41. In this case, the incoming fluid will be ejected into the thermal storage tank 41 at the location of this differential temperature valve 1 b.

Of course, this distributing principle will continue with all of the differential temperature valves 1 a, 1 b, 1 c... to the bottom of the storage tank 41.

As it is easily understandable, the thermal storage tank 41 will be heated up from the top to the bottom, wherein the heating of the thermal storage tank 41 will be performed in a way so that stratified fluid layers of different temperatures will form.

As can be further seen from Fig. 4, several fluid connecting ports 43a, 43b, 43c... are provided in the hull of the thermal storage tank 41. The fluid connecting ports 43a, 43b, 43c... can be used for the supply of various thermal consumers. Depending on the temperature needs of the respective thermal consumer and/or on the priority of the respective thermal consumer, it will be attached to a fluid connection 43a, 43b, 43c... at an appropriate height.

A variation of the thermal storage circuit 40, shown in Fig. 4 can be achieved, if the differential temperature valves 1a, 1b, 1c... are arranged at the side wall of the thermal storage tank 41. In particular, the differential temperature valves 1 a, 1 b, 1 c... can be arranged approximately diametrically opposite of the fluid connections 43a, 43b, 43c... that are provided for the thermal consumers. In such an arrangement, the respective fluid tank sensor groups 9 of the differential temperature valves 1 a, 1b, 1 c... are preferably designed to comprise remote fluid tank temperature sensors, wherein the temperature probe parts of the remote fluid tank temperature sensors are placed inside (preferably in the middle of) the thermal storage tank 41. A temperature probe can be designed as an appropriately dimensioned cavity that is filled with a temperature sensing fluid. The expansion and contraction of the temperature sensing fluid inside the temperature probe can be transmitted to the actuating part of the remote fluid tank temperature sensor - and hence of the differential temperature valve 1 - through a thin capillary tube.

## Claims

1. Actuator unit (4), in particular actuator unit (4) for a valve means (3), **characterised by** at least two mechanical sensor units (10, 11), which are acting on at least one common actuating unit (4, 15, 24).

2. Actuator unit (4) according to claim 1, **characterised by** at least two sensor groups (8, 9), wherein each sensor group (8, 9) comprises at least one mechanical sensor unit (10, 11) and wherein preferably at least one of said sensor groups (8, 9) comprises a plurality of mechanical sensor units (10, 11).

3. Actuator unit (4) according to claim 1 or 2, **characterised in that** at least two of said sensor groups (8, 9) and/or at least two of said mechanical sensor units (10, 11) are detecting a similar parameter and/or are of a similar design (12).

4. Actuator unit (4) according to any of the preceding claims, **characterised in that** at least one, preferably at least two of said mechanical sensor units (10, 11) are designed as temperature measuring units (10, 11) and/or **characterised in that** at least one of said sensor groups (8, 9), preferably at least two of said sensor groups (8, 9) comprises at least one temperature measuring unit (10, 11).

5. Actuator unit (4) according to any of the preceding claims, preferably according to claim 4, **characterised in that** at least one of said sensor units (10, 11), preferably at least one temperature measuring unit (10, 11) comprises at least one variably expanding medium (13).

6. Actuator unit (4) according to any of the preceding claims, **characterised in that** at least one of said sensor units (10, 11) is connected to at least one of said common actuating units (2, 15, 24) by a connecting means (29).

7. Valve unit (1, 2), comprising at least one valve means, **characterised by** at least one actuator unit (4) according to any of the preceding claims.

8. Valve unit (1, 2) according to claim 7, **characterised in that** said valve means (3) comprises at least three fluid ports (5, 6, 7) and is preferably designed as a changeover valve.

9. Fluid storage tank (41), **characterised by** at least one actuator unit (4) according to any of claims 1 to 6 and/or by at least one valve unit (1, 2) according to claim 7 or 8.

10. Fluid storage tank (41) according to claim 9, **characterised by** at least one fluid line (42), communicating with said fluid storage tank (41) through at least one valve unit (1, 2) according to claim 7 or 8.

11. Thermal energy storage system (35), **characterised by** at least one fluid storage tank (41) according to claim 9 or 10.

12. Thermal energy storage system (35) according to claim 11, **characterised by** at least one heat exchanger (39).

13. Thermal energy storage system (35) according to claim 11 or 12, **characterised by** at least one energy input means (36), preferably by at least one energy input means (36) taken from the group comprising solar collectors (36), geothermal collectors, heat pumps, fuel cells, heating means and district heating networks.
